Europäisches Patentamt

European Patent Office

Office européen des brevets

(19)

(11) Publication number: **0 463 694 A2**

# EUROPEAN PATENT APPLICATION

(12)

(21) Application number: **91201564.1**

(22) Date of filing: **19.06.91**

(51) Int. Cl.5: **G06F 1/16**

(30) Priority: **27.06.90 US 544762**

(43) Date of publication of application:
**02.01.92 Bulletin 92/01**

(84) Designated Contracting States:
**DE FR GB IT**

(71) Applicant: **Magnavox Government and Industrial Electronics Company**
**1313 Production Road**
**Fort Wayne Indiana 46808(US)**

(72) Inventor: **Gauldfeldt, David Marc**
**c/o INT. OCTROOIBUREAU B.V. Prof.**
**Holstlaan 6**

**NL-5656 AA Eindhoven(NL)**
Inventor: **Dixon, Alan Eric**
**c/o INT. OCTROOIBUREAU B.V. Prof.**
**Holstlaan 6**
**NL-5656 AA Eindhoven(NL)**
Inventor: **Worster, Michael Bruce**
**c/o INT. OCTROOIBUREAU B.V. Prof.**
**Holstlaan 6**
**NL-5656 AA Eindhoven(NL)**

(74) Representative: **Cuppens, Hubertus Martinus Maria et al**
**INTERNATIONAAL OCTROOIBUREAU B.V.**
**Prof. Holstlaan 6**
**NL-5656 AA Eindhoven(NL)**

(54) **Portable CD-ROM computer system.**

(57) A portable laptop microcomputer with a detachable CD-ROM drive. The CD-ROM drive and a power supply for operating the drive are mounted in a housing which is releasably secured to the top of the microcomputer. An adapter card for operating the CD-ROM drive is mounted in an expansion slot in the microcomputer. A cable is connected between the CD-ROM drive and the microcomputer. The CD-ROM drive is operated from the power source for the microcomputer.

FIG.1

EP 0 463 694 A2

The invention relates to portable computers and more particularly to a portable computer system including a compact disc read only memory (CD-ROM).

Read only optical disc technology or the CD-ROM has been developed where large quantities of read only memory are needed for a computer. A single CD-ROM may contain, for example, the complete text of several volumes of books. In the past, CD-ROM drives have been available only for use with permanently installed computer and microcomputer systems. They have not been available for use with portable microcomputers, for example, of the laptop type.

According to the invention, a portable computer is provided with a CD-ROM drive. An interface card is mounted in an expansion slot in the portable computer. The CD-ROM drive and a DC to DC power converter are mounted together in a housing. Cables interconnect the CD-ROM drive with the computer and provide DC from the computer to the converter for operating the CD-ROM drive. Preferably, the housing is releasably secured to the back of the portable computer at a location where the housing does not interfere with opening and closing a display on the computer. The resulting system is a compact very portable package having the benefit of a large capacity read only memory.

Accordingly, it is an object of the invention to provide a system consisting of a portable computer of the laptop type with a CD-ROM drive.

Other objects and advantages of the invention will be apparent from the following detailed description and the accompanying drawings.

Figure 1 is a block diagram of a portable CD-ROM computer system according to the invention;

Figure 2 is a perspective view of a housing for a CD-ROM drive and a DC to DC converter for the portable CD-ROM computer system of Figure 1;

Figure 3 is a perspective view of the CD-ROM drive and DC to DC converter housing of Figure 2 mounted on a portable computer according to the invention, with the computer display closed;

Figure 4 is a perspective view of the CD-ROM drive and DC to DC converter housing of Figure 2 mounted on a portable computer according to the invention, with the computer display open.

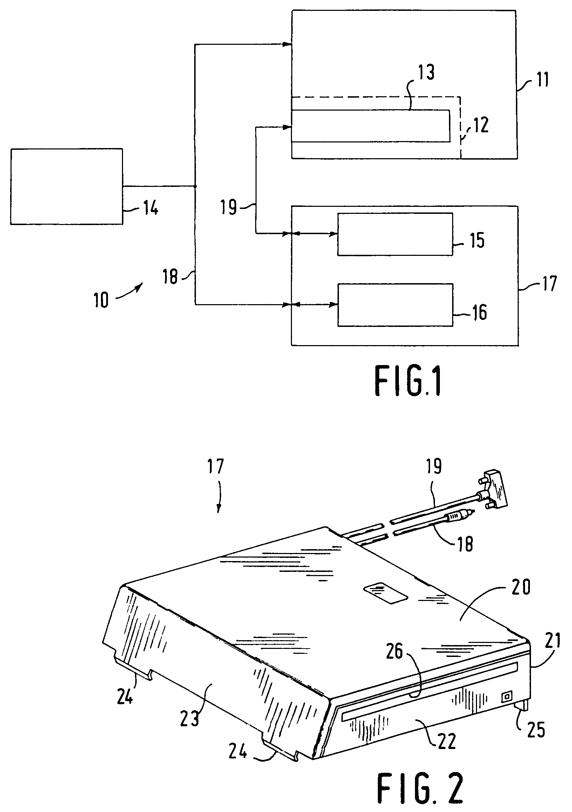

Referring to Figure 1 of the drawings, a block diagram is shown for a portable CD-ROM computer system 10 according to the invention. The system 10 includes a commercially available portable or laptop microcomputer 11 having at least one expansion slot 12 for receiving printed circuit cards. A CD-ROM drive adapter card 13 is shown in the expansion slot 12. The computer 11 may be operated from a separate battery pack (not shown) or from an AC to DC power supply 14 which is connected to a wall outlet.

According to the invention, a CD-ROM drive 15 and a DC to DC converter 16 are mounted in a compact housing 17 which is secured to the computer 11. The DC to DC converter 16 is interconnected by a cable 18 with the power supply 14 and the computer 11 for receiving operating power either from the power supply 14 or from internal rechargeable batteries in the computer 11. The CD-ROM drive 15 is connected through a data and control cable 19 to the computer 11. The computer 11 may be operated under the control of conventional software and of conventional circuitry on the adapter card 13 for information stored on the CD-ROM and to supply such information to the computer 11 for display or for other purposes.

Figure 2 shows details for the housing 17 for the CD-ROM drive 15 and the converter 16. The housing 17 is generally rectangular with a flat top 20, a back 21, sides 22 and a sloping front 23. Hooks 24 depend from the front 23 for engaging mating surfaces (not shown) on the computer 11. Toggle type connectors 25 or other suitable connectors depend from the housing back 21 for releasably securing the housing 17 to the computer 11. A slot 26 is located in one housing side 22 for inserting and ejecting a CD-ROM disc (not shown).

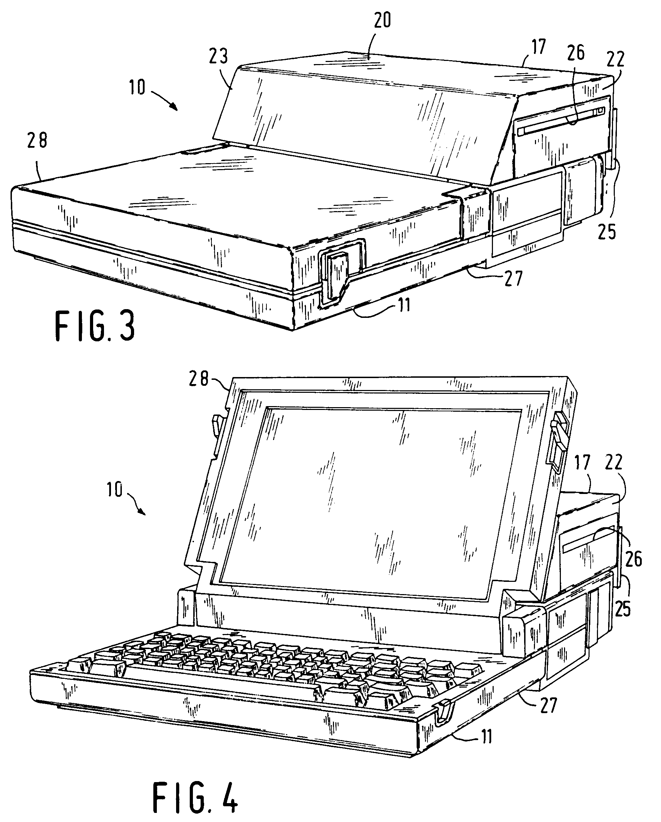

Figures 3 and 4 show the housing 17 secured to a housing 27 for the computer 11. The exemplary illustrated housing 27 is for a GRIDCase Series 1500 Laptop computer. The computer 11 has a display 28 which is secured to the housing 27 to pivot between a stored position, as shown in Figure 3, and an open position, as shown in Figure 4. It will be seen from Figure 4 that when the display 28 is pivoted to the open position, it angles slightly back. The front 23 on the housing 17 is sloped to extend behind and not interfere with the open display 28.

It will be appreciated by those skilled in the art that various modifications and changes may be made in the above described portable Cd-ROM computer system without departing from the spirit and the scope of the following claims. In particular, the design of the computer housing 17 and of the hooks 24 and connectors 25 may be modified, as necessary, for securing the housing 17 to differently designed microcomputer housings.

**Claims**

1. A computer system comprising, in combination, a portable computer including at least one expansion slot, a CD-ROM drive, a power supply for operating said CD-ROM drive, a housing for said CD-ROM drive and said power supply, means for securing said housing to said computer, an adapter card in said expansion slot including circuit means for controlling said CD-ROM drive, and a cable between said housing and said computer connecting said CD-ROM drive with said adapter card.

2. A computer system, as set forth in Claim 1, wherein said portable computer is a laptop microcomputer.

3. A computer system, as set forth in Claim 1, wherein said power supply comprises a DC to DC converter and wherein said converter receives power from a power source for said computer.

4. A computer system, as set forth in Claim 1, wherein said portable computer includes a display which is pivotable between a closed position and an open position, and wherein said means securing said housing to said computer includes means for releasably securing said housing to said portable computer at a location wherein said housing does not interfere with movement of said display between said open and closed positions.

5. A computer system, as set forth in Claim 4, and wherein said housing is releasably secured to a top of said portable computer.

FIG.1

FIG. 2

4

FIG. 3

FIG. 4